# EUROPÄISCHE PATENTSCHRIFT

(11) **EP 4 537 520 B1**
(45) Veröffentlichungstag und Bekanntmachung des Hinweises auf die Patenterteilung: **15.04.2026**
(21) Anmeldenummer: 23754774.0
(22) Anmeldetag: 09.08.2023
(51) Int. Cl.: H04N 1/393, H04N 1/60

(54) **COMPUTER-IMPLEMENTIERTE VERFAHREN, SERVER, CLIENT, NETZWERKSYSTEM UND COMPUTERLESBARE SPEICHERMEDIEN**
COMPUTER-IMPLEMENTED METHODS, SERVER, CLIENT,NETWORK SYSTEM AND COMPUTER-READABLE STORAGE MEDIUMS
PROCÉDÉS MIS EN OEUVRE PAR ORDINATEUR, SERVEUR, CLIENT,SYSTÈME DE RÉSEAU ET SUPPORTS DE STOCKAGE LISIBLES PAR ORDINATEUR

(30) Priorität: 10.08.2022 DE 102022120184
(43) Veröffentlichungstag der Anmeldung: 16.04.2025
(73) Patentinhaber: Macher für Morgen GmbH, 86153 Augsburg (DE)
(72) Erfinder: HEIDE, Michel, 86156 Augsburg (DE); SCHMACHTEL, Jürgen, 86153 Augsburg (DE)
(74) Vertreter: Winter, Brandl - Partnerschaft mbB
(86) Internationale Anmeldenummer: PCT/EP2023/072089
(87) Internationale Veröffentlichungsnummer: WO 2024/033433

(56) Entgegenhaltungen:
- EP-A1- 3 627 813
- WO-A2-03/087976
- US-A1- 2004 075 866
- HP DEVELOPMENT COMPANY ET AL: "HP Latex Printing Technology", 31 December 2015 (2015-12-31), pages 1 - 24, XP93098868, Retrieved from the Internet <URL:https://uscutter.com/content/PDFs/HP-Latex-Catalog-Simplified-Version.pdf> [retrieved on 20231107]
- CREATE A WALL: "How to use 'HP Wallart Suite' w Create a Wall", 25 May 2016 (2016-05-25), XP93098883, Retrieved from the Internet <URL:https://www.youtube.com/watch?v=JPXCUc-xi6Y> [retrieved on 20231107]
- HP DEVELOPMENT COMPANY ET AL: "HP Latex Printing Technology", 31 December 2015 (2015-12-31), pages 1 - 24, XP093098868, Retrieved from the Internet <URL:https://uscutter.com/content/PDFs/HP-Latex-Catalog-Simplified-Version.pdf> [retrieved on 20231107]
- HEWLETT-PACKARD DEVELOPMENT COMPANY,: "HP WallArt Solution The app for Tablets", 31 December 2013 (2013-12-31), pages 1 - 27, XP093098870, Retrieved from the Internet <URL:https://hpwallart.com/Help/HP_WallArt_Solution_for_Tablets.pdf> [retrieved on 20231107]
- CREATE A WALL: "How to use 'HP Wallart Suite' w Create a Wall", 25 May 2016 (2016-05-25), XP093098883, Retrieved from the Internet <URL:https://www.youtube.com/watch?v=JPXCUc-xi6Y> [retrieved on 20231107]

## Beschreibung

Die vorliegende Erfindung betrifft computer-implementierte Verfahren, einen Server, einen Client, ein Netzwerksystem und computerlesbare Speichermedien, die ein flächenfüllendes Bedrucken eines Mediums, insbesondere einer Tapete, eines Plakats oder eines Banners, ermöglichen.

Aus JP 2002 - 132 330 A ist ein Verfahren zum Bestellen einer Tapete bekannt, bei dem ein Bild mehrmals nebeneinander und übereinander auf die Tapete gedruckt wird. Dabei kann eine Wiederholung und eine Verschiebung des Bilds auf der Tapete durch einen Nutzer angepasst werden.

Ein ähnliches Verfahren ist auch aus der US 2001 / 0 017 089 A1 bekannt.

JP 2004 - 086 746 A offenbart ein Verfahren zum Erstellen von Inneneinrichtungen, z.B. Tapeten, die eine Holz- oder Steinoptik aufweisen. Dazu wird ein Originalbild übereinander und nebeneinander mehrmals angeordnet, wobei vertikale Reihen zueinander verschoben sind.

US 2004 / 0 075 866 A1 offenbart ein System und ein Verfahren zur Erstellung eines Posters.

WO 03 / 087 976 A2 und WO 03 / 087 977 A2 offenbaren ein Verfahren zum Bedrucken unterschiedlicher Substrate, z.B. Tapeten, Poster, Grußkarten usw., bei dem ein Nutzer beispielsweise über eine Website ein Bild auswählt und das Bild entsprechend seinen Wünschen anpasst. Anschließend werden die Anpassungen an einen Server übertragen und das Bild wird entsprechend den Anpassung neu generiert, erneut auf die Website übertragen und angezeigt, so dass der Nutzer seine Anpassungen überprüfen kann. Demzufolge wird bei jeder Anpassung durch den Nutzer ein neues Bild generiert und an die Website übertragen.

Beim flächenfüllenden Bedrucken eines großflächigen oder großformatigen Mediums, wie etwa einer Tapete, eines Plakats oder eines Banners, ist es jedoch erforderlich, dass ein Originalbild eine ausreichende Größe und Auflösung aufweist, um eine ausreichende Druckqualität sicherzustellen. Demzufolge kann sich bei einem wiederholten Übertragen des angepassten Bildes eine Bedienbarkeit der Website verschlechtern.

Es ist daher Aufgabe der vorliegenden Erfindung, computer-implementierte Verfahren, einen Server, einen Client, ein Netzwerksystem und computerlesbare Speichermedien bereitzustellen, die ein flächenfüllendes Bedrucken eines Mediums ermöglichen, während gleichzeitig eine Bedienbarkeit bzw. Benutzerfreundlichkeit beim Generieren des Medium sichergestellt wird. Zusätzlich soll eine hohe Druckqualität des Mediums sichergestellt werden.

Die Aufgabe wird durch die computer-implementierten Verfahren gemäß den Ansprüchen 1 und 5, den Server gemäß Anspruch 11, den Client gemäß Anspruch 12, das Netzwerksystem gemäß Anspruch 13 und die computerlesbaren Speichermedien gemäß den Ansprüchen 14 und 15 gelöst. Vorteilhafte Ausführungsformen sind Gegenstand der abhängigen Ansprüche.

Ein erfindungsgemäßes computer-implementiertes Verfahren, das durch einen Server ausführbar ist, umfasst die nachfolgenden Schritte.

Zunächst wird ein Originalbild aus einem Speicher des Servers geladen. Das Originalbild umfasst einen Bildausschnitt, der flächenfüllend bzw. vollflächig auf ein Medium zu drucken ist, und wird vorab von einem Betreiber des Servers in dem Speicher des Servers abgelegt. Zusätzlich oder alternativ kann das Originalbild auch über einen später beschriebenen Client an den Server übertragen und in dem Speicher des Servers abgelegt werden. Flächenfüllend bedeutet dabei, dass keine Bilder nebeneinander oder übereinander auf dem Medium angeordnet sind und das Medium nur mit einem einzelnen Bild bedruckt wird.

Anschließend wird das Originalbild zu einem Vorschaubild verkleinert und/oder komprimiert. Das Vorschaubild weist folglich einen geringeren Speicherplatzbedarf als das Originalbild auf. Zu beachten ist, dass das Vorschaubild jedoch noch derart detailgetreu ist, dass der Bildausschnitt des Originalbilds, der auf das Medium gedruckt werden soll, identifizierbar bleibt.

Das Vorschaubild wird dann an den Client übertragen und es werden eine Mediumgröße des zu bedruckenden Mediums und Merkmale eines Vorschaubildbereichs, der der Mediumgröße und einem gewünschten Inhalt des zu bedruckenden Mediums in dem Vorschaubild entspricht, von dem Client empfangen. Der Vorschaubild gibt demnach den Bildausschnitt, der später auf das Medium gedruckt werden soll, in dem Vorschaubild an. Der Vorschaubildbereich ist kleiner als das Vorschaubild festgelegt. Bei Anpassung des Vorschaubildbereichs wird kein neues Vorschaubild generiert und übertragen.

Danach wird der Vorschaubildbereich auf das Originalbild transformiert, um einen Originalbildbereich zu erhalten, der flächenfüllend auf das Medium zu drucken ist. Da das Vorschaubild eine andere Größe und/oder Auflösung als das Originalbild aufweist, weisen die beiden Bilder auch unterschiedliche Koordinatensysteme auf. Das Transformieren des Vorschaubildbereichs auf das Originalbild entspricht somit einer Koordinatentransformation.

Final wird ein Druckbefehl zum flächenfüllenden Drucken des Originalbildbereichs auf das Medium an einen Drucker ausgegeben. Der Drucker druckt dann das den Originalbildbereich flächenfüllend auf das Medium. Der Drucker kann den Originalbildbereich auch auf Mediummaterial drucken, das größer als das Medium ist, und anschließend das Mediummaterial auf die gewünschte Mediumgröße zuschneiden.

Das erfindungsgemäße Verfahren ermöglicht das flächenfüllende Bedrucken des Mediums. Durch das Verkleinern und/oder Komprimieren des Originalbilds zu einem Vorschaubild wird die von dem Server an den Client zu übertragende Datenmenge reduziert, so dass eine Bedienbarkeit des Clients verbessert wird, insbesondere werden Ladezeiten bei geringen Übertragungsraten verkürzt.

Bevorzugterweise kann vor dem Übertragen des Vorschaubilds an den Client eine maximale Mediumgröße, insbesondere eine maximale Mediumhöhe und eine maximalen Mediumbreite, anhand einer Größe und einer Auflösung des Originalbilds ermittelt werden. Beim Übertragen des Vorschaubilds kann dann zusätzlich die maximale Mediumgröße übertragen werden. Demnach kann die in den Client eingebbare Mediumgröße auf die maximale Mediumgröße begrenzt werden, so dass eine ausreichende Druckqualität, insbesondere eine Auflösung, des Mediums sichergestellt wird. Zusätzlich kann eine maximale Mediumgröße auch durch Spezifikationen eines verwendeten Druckers vorgegeben sein.

Mit Vorteil kann das Vorschaubild durch Umwandeln in das jpg- oder WebP-Format komprimiert werden. Das Originalbild kann im png-, jpg-, svg- oder tiff-Format gespeichert sein und durch das Umwandeln in das jpg- oder WebP-Format kann eine Dateigröße verringert werden. Folglich kann auch eine Datenmenge beim Übertragen des Vorschaubilds effektiv reduziert werden.

Ein weiteres erfindungsgemäßes computer-implementiertes Verfahren, das durch einen Client, insbesondere einen Web-Client oder eine Anwendung eines Computers, eines Smartphones, eines Tablets oder sonstigen Endgeräts, ausführbar ist, umfasst die nachfolgenden Schritte.

Zunächst wird das Vorschaubild von dem Server empfangen. Da das Vorschaubild zuvor durch den Server verkleinert und/oder komprimiert wurde, ist nur eine reduzierte Datenmenge zu übertragen.

Anschließend wird eine Mediumgröße eines zu bedruckenden Mediums, insbesondere durch einen Nutzer des Clients, in den Client eingegeben. Das Medium ist bevorzugt ein Plakat, ein Poster oder ein Banner mit einer rechteckigen Form. Demzufolge ist eine Länge und eine Breite des Rechtecks einzugeben. Das Medium kann aber auch eine andere Form aufweisen. Beispiele sind ein Kreis, eine Ellipse, ein Dreieck, andere Vielecke oder ein benutzerdefiniertes Format, das beispielsweise Aussparung und Vorsprünge aufweist. Die Formen können durch Eingeben von Eckpunkten oder eines Mittelpunkts und dazugehöriger Radien eingegeben werden. Alternativ kann ein Spline oder Polynomzug eingegeben werden.

Wenn die Mediumgröße eingegeben wurde, wird ein Vorschaubildbereich, der der Mediumgröße, d.h. einem Format des Mediums, und einem gewünschten Inhalt des zu bedruckenden Mediums in dem Vorschaubild entspricht, festgelegt. Es ist anzumerken, dass das Format des Mediums und das Format des Vorschaubilds bzw. des Originalbilds voneinander abweichen können. Der Vorschaubildbereich wird kleiner als das Vorschaubild festgelegt. Der Vorschaubildbereich wird unter Verwendung einer grafischen Nutzeroberfläche, die eine Echtbilddarstellung ermöglicht, wie z.B. einer Website, festgelegt. Dabei werden Bereiche des Vorschaubilds, die im Vorschaubildbereich enthalten sind, hervorgehoben angezeigt. Dies kann z.B. dadurch erreicht werden, dass diese Bereiche normal angezeigt werden, während Bereiche außerhalb des Vorschaubildbereichs mit einem geringeren Kontrast und/oder einer geringeren Helligkeit und/oder einer geringeren Sättigung angezeigt werden. Bei Anpassung des Vorschaubildbereichs wird kein neues Vorschaubild empfangen. Folglich ist es nicht erforderlich, dass bei jeder Anpassung durch den Client ein neues Bild generiert wird und der Nutzer des Clients kann einen Inhalt des Vorschaubildbereichs zuverlässig festlegen.

Abschließend werden die eingegebene Mediumgröße und die Merkmale des Vorschaubildbereichs an den Server übertragen. Demzufolge ist es nicht erforderlich, dass ein durch den Client bearbeitetes oder zugeschnittenes Bild zurück an den Server übertragen wird, so dass eine zu übertragende Datenmenge reduziert werden kann.

Der Vorschaubildbereich kann insbesondere durch Drehen des Vorschaubilds festgelegt werden. Das Vorschaubild kann dabei auch in bestimmten Winkelschritten, z.B. in 45°- oder 90°-Schritten, gedreht werden. Zusätzlich oder alternativ kann der Vorschaubildbereich durch Spiegeln des Vorschaubilds festgelegt werden. Das Spiegeln kann dabei insbesondere auf Spiegelungen des Vorschaubilds an einer zentralen horizontalen Achse oder einer zentralen vertikalen Achse begrenzt sein. Zusätzlich oder alternativ kann, falls die eingegebene Mediumgröße kleiner als die maximale Mediumgröße ist, das Festlegen des Vorschaubildbereichs ein Vergrößern des Vorschaubilds umfassen. Folglich wird das Vorschaubild in dem Vorschaubildbereich vergrößert angezeigt. Durch die oben genannten Maßnahmen kann der Nutzer den Vorschaubildbereich in dem Vorschaubild entsprechend seinen Anforderungen festlegen. Demzufolge kann auch ein Inhalt des Mediums auf einfache Weise festgelegt werden.

Die Merkmale des Vorschaubildbereichs können dabei die Form und die Größe des Vorschaubildbereichs umfassen. Bekannterweise kann ein Pixelbild als ein Koordinatensystem angesehen werden und die Angaben über die Form und die Größe des Vorschaubildbereichs können z.B. anhand einer Funktionsgleichung angegeben werden. Wenn das Medium insbesondere ein Rechteck ist, ist es bereits ausreichend, wenn die Merkmale des Vorschaubildbereichs X- und Y- Koordinaten von mindestens zwei diagonal gegenüberliegenden Eckpunkten des Vorschaubildbereichs umfassen. Alternativ können auch die X- und Y-Koordinaten eines Eckpunkts zusammen mit einer Länge und einer Breite des Vorschaubildbereichs in den Merkmalen des Vorschaubildbereichs vorhanden sein, so dass der zweite Eckpunkt des rechteckigen Vorschaubildbereichs berechnet werden kann. Die Länge und die Breite des Vorschaubildbereichs werden entsprechend der Ausbreitungsrichtung des Vorschaubildbereichs von dem Eckpunkt als positive oder negative Werte angegeben. Besonders bevorzugt wird der Eckpunkt als ein Offset von einer linken oberen Ecke des Vorschaubilds, die demzufolge als Koordinatenursprung verwendet wird, übertragen. Alternativ oder zusätzlich können die Merkmale des Vorschaubildbereichs eine Größe des Vorschaubilds umfassen. Die Größe des zuvor übertragenen Vorschaubildbereichs kann aber auch durch den Server gespeichert werden. Alternativ oder zusätzlich können die Merkmale des Vorschaubildbereichs einen Drehwinkel des Vorschaubilds und/oder eine Spiegelung des Vorschaubilds und/oder einen Vergrößerungsfaktor des Vorschaubilds umfassen. Demzufolge ist eine genaue Bestimmung des festgelegten Vorschaubildbereichs durch den Server, an den die Merkmale des Vorschaubildbereichs übertragen werden, und demzufolge auch ein exaktes Transformieren des Vorschaubildbereichs auf das Originalbild zum Generieren des Originalbildbereichs möglich.

Bevorzugt ist eine Länge einer längeren Seite des Vorschaubilds 1920 Pixel. Noch bevorzugter ist eine Länge einer längeren Seite des Vorschaubild 1000 Pixel. Diese Längen erlauben es, eine für die Übertragung des Vorschaubilds erforderliche Datenmenge effektiv zu verringern, während ein Detailgrad des Vorschaubilds zum Auswählen des Vorschaubildbereichs weiterhin gewährleistet ist. Besonders bevorzugt wird durch den Server ein Typ des Clients ermittelt und die Länge der längeren Seite des Vorschaubilds entsprechend dem Typ des Clients festgelegt. Wird z.B. erfasst, dass der Client ein PC oder ein Laptop ist, kann die Länge der längeren Seite auf 1920 Pixel festgelegt werden. Wird andererseits z.B. erfasst, dass der Client ein Smartphone oder Tablet ist, kann die Länge der längeren Seite auf 1000 Pixel festgelegt werden.

Zusätzlich kann eine Auflösung des Vorschaubildbereichs auf 72 dpi betragen. Falls die Auflösung des Originalbilds kleiner als 72 dpi ist, kann selbstverständlich auch die kleinere Auflösung (z.B. 70 dpi) verwendet werden. Demzufolge ist das Vorschaubild für eine Anzeige auf dem Client optimiert und die vom Server zum Client zu übertragende Datenmenge kann effizient reduziert werden.

Insbesondere kann das Medium eine minimale Mediumgröße von 1 m mal 1 m aufweisen. Für diese Mediengrößen ist ein ausreichend großes Originalbild mit einer ausreichenden Auflösung erforderlich. Folglich wird auch eine effektive Reduzierung der für die Übertragung des Vorschaubilds erforderlichen Datenmenge erreicht. Wie bereits erwähnt ist das Medium insbesondere eine Tapete, ein Poster oder ein Banner, die in einem Stück, d.h. ohne ein Aneinanderfügen von Bahnen, aufgebracht werden. Ein Beispiel hierfür ist eine lösbare Tapete, die aus EP 3 721 007 A1 bekannt ist.

Das Originalbild sollte bei der genannte Mediumgröße eine minimale Größe von 2700 Pixel mal 2700 Pixel und eine minimale Auflösung von 70 dpi aufweisen. Durch die Verwendung eines Originalbilds mit diesen Eigenschaften wird eine hohe Druckqualität des Mediums sichergestellt.

Ein erfindungsgemäßer Server weist einen Speicher, in dem ein Originalbild gespeichert ist, eine Netzwerkschnittstelle, die zum Kommunizieren mit einem Netzwerk, wie etwa dem Internet, ausgebildet ist, und einen Prozessor auf. In dem Speicher des Servers ist ein Computerprogramm gespeichert, das bei Ausführen durch den Prozessor, diesen veranlasst, die Schritte des computer-implementierten Verfahrens auszuführen. Der Prozessor ist demnach programmiert, um die folgenden Schritte auszuführen: Laden eines Originalbilds aus dem Speicher; Verkleinern und/oder Komprimieren des Originalbilds zu einem Vorschaubild; Übertragen des Vorschaubilds an einen Client über die Netzwerkschnittstelle; Empfangen einer Mediumgröße eines zu bedruckenden Mediums und von Merkmalen eines Vorschaubildbereichs, der der Mediumgröße und einem gewünschten Inhalt des zu bedruckenden Mediums in dem Vorschaubild entspricht, von dem Client über die Netzwerkschnittstelle, wobei der Vorschaubildbereich kleiner als das Vorschaubild festgelegt ist, wobei bei Anpassung des Vorschaubildbereichs kein neues Vorschaubild generiert und übertragen wird; Transformieren des Vorschaubildbereichs auf das Originalbild, um einen Originalbildbereich zu erhalten, der flächenfüllend auf das Medium zu drucken ist, und Ausgeben eines Druckbefehls zum flächenfüllenden Drucken des Originalbildbereichs auf das Medium an einen Drucker. Der Server stellt folglich die vorteilhaften Effekte des oben beschriebenen computer-implementierten Verfahrens bereit.

Ein erfindungsgemäßer Client weist einen Speicher, eine Netzwerkschnittstelle, die zum Kommunizieren mit einem Netzwerk, wie etwa dem Internet, ausgebildet ist, und einen Prozessor auf. In dem Speicher des Clients ist ein Computerprogramm gespeichert, das bei Ausführen durch den Prozessor, diesen veranlasst, die Schritte des computer-implementierten Verfahrens auszuführen. Der Prozessor ist demnach programmiert, um die folgenden Schritte auszuführen: Empfangen eines Vorschaubilds von einem Server über die Netzwerkschnittstelle und Speichern des Vorschaubilds im Speicher; Eingeben einer Mediumgröße eines zu bedruckenden Mediums; Festlegen eines Vorschaubildbereichs, der der Mediumgröße und einem gewünschten Inhalt des zu bedruckenden Mediums in dem Vorschaubild entspricht, wobei der Vorschaubildbereich kleiner als das Vorschaubild festgelegt wird, wobei der Vorschaubildbereich unter Verwendung einer grafischen Nutzeroberfläche, die eine Echtbildartstellung ermöglicht, angezeigt wird, wobei Bereiche des Vorschaubilds, die in dem Vorschaubildbereich enthalten sind, hervorgehoben angezeigt werden, wobei bei Anpassung des Vorschaubildbereichs kein neues Vorschaubild empfangen wird; und Übertragen der Mediumgröße und von Merkmalen des Vorschaubildbereichs an den Server über die Netzwerkschnittstelle. Der Client stellt folglich die vorteilhaften Effekte des oben beschriebenen computer-implementierten Verfahrens bereit.

Ein erfindungsgemäßes Netzwerksystem umfasst den Server und den Client. Es ist anzumerken, dass in dem Netzwerksystem auch mehrere Server und Clients vorhanden sein können. Ferner umfasst das Netzwerksystem einen Drucker, der derart ausgebildet ist, dass er den Druckbefehl von dem Server empfängt und den Originalbildbereich anschließend flächenfüllend auf das Medium druckt. Ein Netzwerk des Netzwerksystems kann dabei das Internet sein, so dass der Client von überall auf der Welt ein Medium entwerfen und den flächenfüllenden Druck dafür in Auftrag geben kann.

Ferner umfasst die vorliegende Erfindung ein computerlesbares Speichermedium, das Befehle umfasst, die bei Ausführung durch einen Computer, insbesondere einen Server, diesen veranlassen, das zuerst beschriebene computer-implementierte Verfahren auszuführen.

Die vorliegende Erfindung umfasst außerdem ein computerlesbares Speichermedium, das Befehle umfasst, die bei Ausführung durch einen Computer, insbesondere einen Client, diesen veranlassen, das andere computer-implementierte Verfahren auszuführen.

Die Gegenstände der vorliegenden Erfindung ermöglichen das flächenfüllende Bedrucken eines Mediums, insbesondere einer Tapete, eines Posters oder eines Banners, während gleichzeitig eine zu übertragende Datenmenge reduziert wird. Folglich kann eine Bedienbarkeit eines Clients verbessert werden. Zusätzlich kann eine erforderliche Druckqualität des Medium sichergestellt werden.

Nachfolgend werden Ausführungsformen der vorliegenden Erfindung unter Bezugnahme auf die beigefügten Figuren beschrieben. Es zeigen:
Fig. 1 ein Netzwerksystem, in dem ein Server, ein Client und ein Drucker über ein Netzwerk miteinander kommunizieren können, gemäß einer Ausführungsform der vorliegenden Erfindung;
Fig. 2A und Fig. 2B ein Ablaufdiagramm, das die Schritte eines Verfahrens gemäß der Ausführungsform der vorliegenden Erfindung zeigt;
Fig. 3 eine Verarbeitung zum Verkleinern und/oder Komprimieren eines Originalbilds zu einem Vorschaubild; und
Fig. 4 das Vorschaubild, in dem ein Vorschaubildbereich festgelegt ist, und eine Verarbeitung zum Transformieren des Vorschaubildbereichs auf das Originalbild, um einen Originalbildbereich zu generieren.

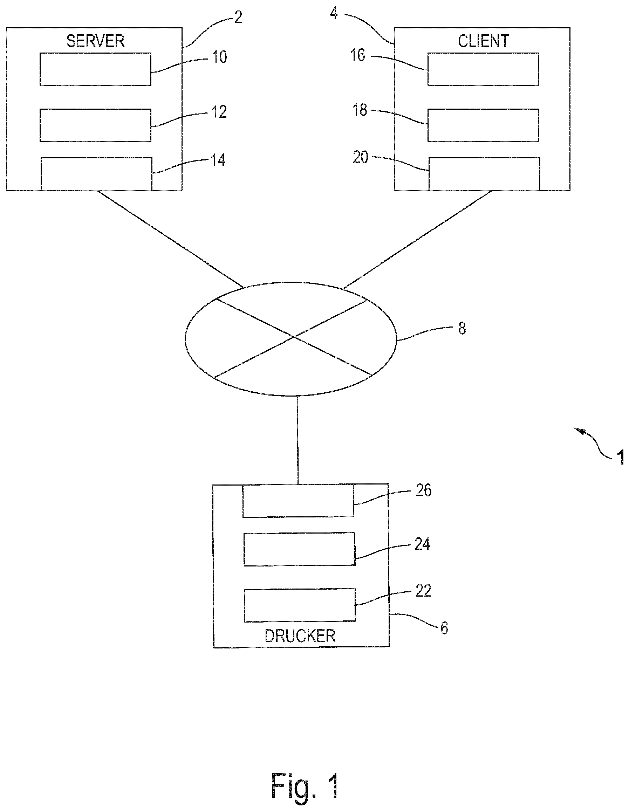

Fig. 1 zeigt ein Netzwerksystem 1 gemäß einer Ausführungsform der vorliegenden Erfindung, das einen Server 2, einen Client 4 und einen Drucker 6 aufweist, die über ein Netzwerk 8, wie etwa das Internet, miteinander kommunizieren können. Es ist anzumerken, dass ein Netzwerksystem 1 mit lediglich einem Server 2, einem Client 4 und einem Drucker 6 gezeigt ist, aber das Netzwerksystem 1 kann durchaus eine Mehrzahl von Servern 2, Clients 4 und Druckern 6 aufweisen, die an unterschiedlichen Standorten aufgestellt bzw. vorhanden sind.

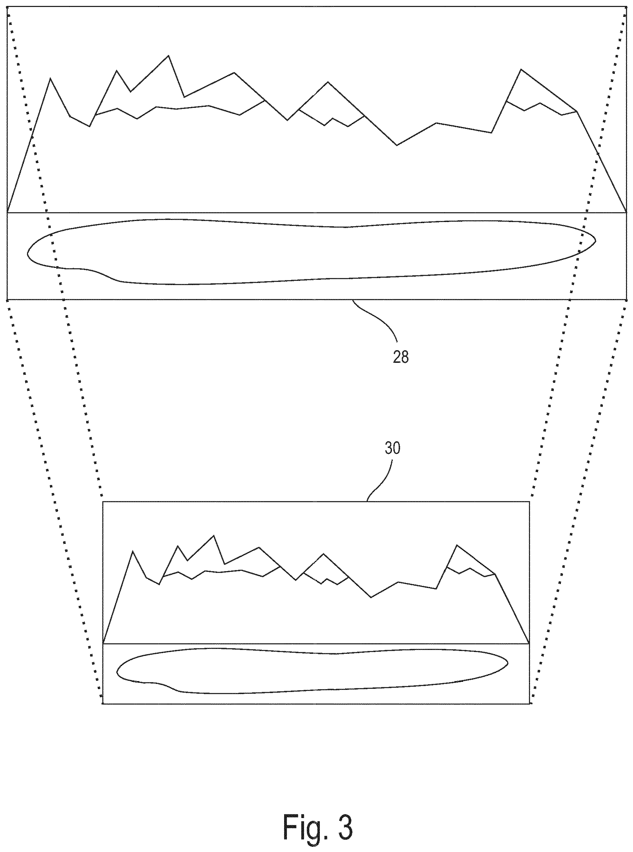

Der Server 2 weist einen Speicher 10, einen Prozessor 12 und eine Netzwerkschnittstelle 14 auf. In dem Speicher 10 ist mindestens ein Originalbild 28 (siehe Fig. 3), das später beschrieben wird, und ein Computerprogramm gespeichert. Der Prozessor 12 ist ausgebildet, um das im Speicher 10 gespeicherte Computerprogramm zu lesen, und wird dadurch so programmiert, dass er Schritte eines Verfahrens gemäß der vorliegenden Ausführungsform ausführt. Über die Netzwerkschnittstelle 14 kann der Prozessor 12 zudem Daten an das Netzwerk 8 übertragen oder von diesem empfangen. Die Netzwerkschnittstelle 14 kann eine kabellose oder eine kabelgebundene Netzwerkschnittstelle sein. Daten, die über die Netzwerkschnittstelle 14 empfangen werden, können durch den Prozessor 12 im Speicher 10 abgelegt werden.

Der Client 4 weist einen Speicher 16, einen Prozessor 18 und eine Netzwerkschnittstelle 20 auf. In dem Speicher 16 ist ein Computerprogramm gespeichert. Der Prozessor 18 ist ausgebildet, um das im Speicher 16 gespeicherte Computerprogramm zu lesen, und wird dadurch so programmiert, dass er Schritte des Verfahrens gemäß der vorliegenden Ausführungsform ausführt. Über die Netzwerkschnittstelle 20 kann der Prozessor 18 zudem Daten an das Netzwerk 8 übertragen oder von diesem empfangen. Die Netzwerkschnittstelle 20 kann eine kabellose oder eine kabelgebundene Netzwerkschnittstelle sein. Daten, die über die Netzwerkschnittstelle 20 empfangen werden können durch den Prozessor 18 im Speicher 16 abgelegt werden.

Der Drucker 6 weist ebenfalls einen Speicher 22, einen Prozessor 24 und eine Netzwerkschnittstelle 26 auf. In dem Speicher 22 ist ein Computerprogramm gespeichert und der Prozessor 24 wird durch Ausführen des Computerprogramms so konfiguriert, dass er einen Druckbefehl über die Netzwerkschnittstelle 26 empfängt und ein später beschriebenes Medium druckt. Die Netzwerkschnittstelle 26 kann als kabellose oder kabelgebundene Netzwerkschnittstelle ausgebildet sein. Alternativ kann der Drucker 6 auch direkt an den Server 2 angeschlossen sein.

Wie bereits erwähnt, sind in dem Speicher 10 des Servers 2 und in dem Speicher 16 des Clients 4 Computerprogramme gespeichert, die jeweils von den Prozessoren 12, 18 gelesen werden können, um diese so zu konfigurieren, dass sie in Zusammenarbeit das Verfahren gemäß der vorliegenden Ausführungsform ausführen.

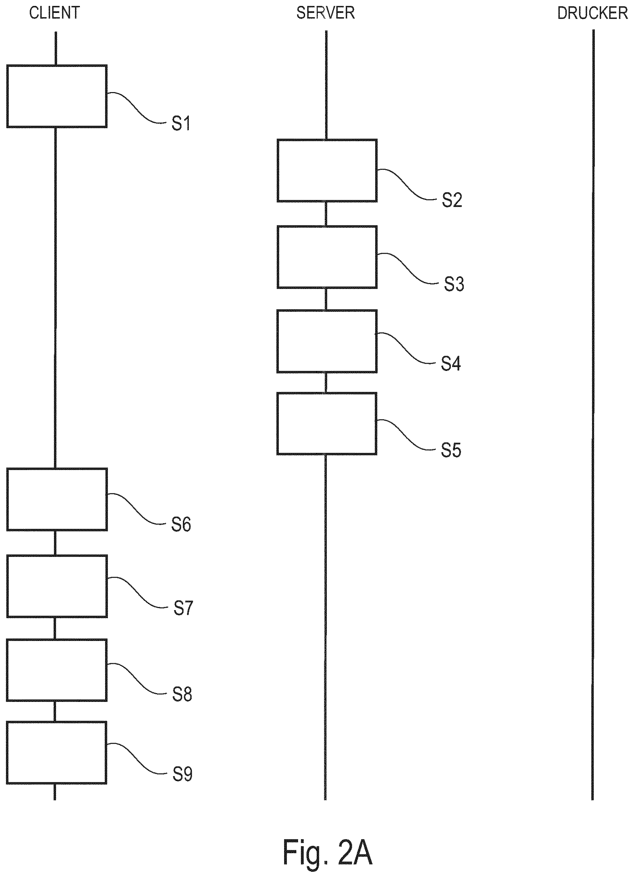

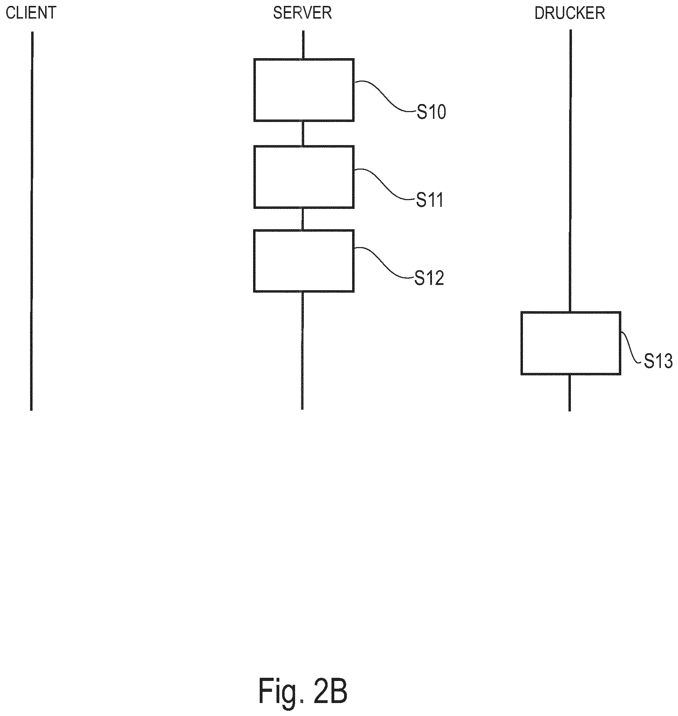

Die einzelnen Schritte des Verfahrens gemäß der vorliegenden Ausführungsform werden nachfolgend unter Bezugnahme auf das Ablaufdiagramm in den Figuren 2A und 2B beschrieben. Es ist anzumerken, dass das Ablaufdiagramm in Fig. 2B die Fortsetzung des Ablaufdiagramms in Fig. 2A darstellt.

In Schritt S1 kann durch den Client 4 ein Bild, das auf das Medium zu drucken ist, z.B. über eine Website, die durch den Server 2 bereitgestellt und von dem Client 4 aufgerufen wird, ausgewählt werden und es können Angaben, die es dem Server 2 erlauben, das Bild zu identifizieren, von dem Client 4 über das Netzwerk 6 an den Server 2 übertragen werden. Die Auswahl des Bildes kann auch über eine auf dem Client 4 installierte Anwendung erfolgen. Alternativ kann auch ein Bild von dem Client 4 zu dem Server 2 über das Netzwerk 6 hochgeladen werden. Der Server 2 speichert dann das Bild als Originalbild 28 in dem Speicher 10. Hierfür kann wiederum die Website oder die Anwendung auf dem Client 4 verwendet werden.

In der vorliegenden Ausführungsform ist das Medium insbesondere eine Tapete, ein Poster oder ein Banner, die in einem Stück, d.h. ohne ein Aneinanderfügen von Bahnen, z.B. auf einer Wand oder einer Werbetafel, aufgebracht werden sollen. Ein Beispiel hierfür ist eine lösbare Tapete, die aus EP 3 721 007 A1 bekannt ist. Das Medium in der vorliegenden Ausführungsform weist eine rechteckige Form auf und die minimale Mediumgröße beträgt 1 m mal 1 m.

In Schritt S2 wird das Originalbild 28 (siehe Fig. 3), das dem in Schritt S1 ausgewählten Bild entspricht, aus dem Speicher 10 des Servers 2 geladen. Wie bereits erwähnt, weist das Medium eine minimale Größe von 1 m mal 1 m auf. Für diese Mediumgröße ist ein ausreichend großes Originalbild 28 mit einer ausreichenden Auflösung erforderlich. Das Originalbild 28 sollte deshalb eine minimale Größe von 2700 Pixel mal 2700 Pixel und eine minimale Auflösung von 70 dpi aufweisen, um eine ausreichend hohe Druckqualität des Medium sicherzustellen.

In Schritt S3 wird das Originalbild 28 zu einem Vorschaubild 30 verkleinert und/oder komprimiert. Die Verkleinerung/Komprimierung des Originalbilds 28 zu dem Vorschaubild 30 ist in Fig. 3 gezeigt. In dem Originalbild 28 ist eine Bergkette und ein davor befindlicher See dargestellt. Bei der Verkleinerung/Komprimierung wird die Größe des Vorschaubilds 30 verglichen mit der Größe des Originalbilds 28 reduziert. In dem Vorschaubild 30 sind die Bergkette und der davor befindliche See weiterhin in einem ausreichenden Detailsgrad dargestellt, so dass der Inhalt des Originalbilds 28 weiterhin in dem Vorschaubild 30 erkennbar ist.

Dabei kann eine Länge einer längeren Seite des Vorschaubilds 30 bevorzugt auf 1920 Pixel und noch bevorzugter auf 1000 Pixel festgelegt werden. Besonders bevorzugt erfasst der Server 2 einen Typ des Clients 4 und die Länge der längeren Seite des Vorschaubilds 30 wird in Abhängigkeit des Typs des Clients 4 festgelegt. Wird z.B. erfasst, dass der Client 4 ein PC oder Laptop ist, kann die Länge der längeren Seite auf 1920 Pixel festgelegt werden. Wird andererseits z.B. erfasst, dass der Client 4 ein Smartphone oder Tablet ist, kann die Länge der längeren Seite des Vorschaubilds 30 auf 1000 Pixel festgelegt werden. Alternativ oder zusätzlich kann das Originalbild 28, das initial in einem png-, jpg-, svg- oder tiff-Format gespeichert sein kann, durch Umwandeln in das jpg- oder WebP-Format zu dem Vorschaubild 30 komprimiert werden.

Ferner kann auch eine Auflösung des Vorschaubilds 30 verglichen mit einer Auflösung des Originalbilds 28 verringert werden. Die Auflösung des Vorschaubilds 30 kann dabei besonders bevorzugt auf 72 dpi festgelegt werden. Sollte die Auflösung des Originalbilds 28 kleiner als 72 dpi, insbesondere die minimal erforderliche Auflösung von 70 dpi, sein, kann selbstverständlich auch diese geringere Auflösung verwendet werden.

Zurück zu Fig. 2A. In Schritt S4 kann optional eine maximale Mediumgröße anhand einer Größe und einer Auflösung des Originalbilds 28 ermittelt werden. In der vorliegenden Ausführungsform weist das Originalbild 28 eine rechteckige Form auf (siehe Fig. 3), so dass die maximale Mediumgröße eine maximale Mediumhöhe und eine maximale Mediumbreite umfasst. Falls das Medium dann keine rechteckige Form aufweisen sollte, ist es erforderlich, dass die maximale Mediumgröße innerhalb des oben ermittelten Rechtecks liegt.

In Schritt S5 wird das Vorschaubild 30 von dem Server 2 an den Client 4 übertragen. Für den Fall, dass in Schritt S4 die maximale Mediumgröße ermittelt wird, wird in Schritt S5 zusätzlich die maximale Mediumgröße von dem Server 2 an den Client 4 übertragen. Es ist anzumerken, dass eine maximale Mediumgröße nicht nur durch die Größe bzw. die Auflösung des Originalbilds 28 vorgegeben sein kann. Eine maximale Kantenlänge des Mediums kann zudem durch eine maximal bedruckbare Breite durch den Drucker 6 vorgegeben sein.

In Schritt S6 wird das Vorschaubild 30 durch den Client 4 empfangen. Falls in Schritt S5 die maximale Mediumgröße übertragen wird, wird diese ebenfalls durch den Client 4 empfangen.

In Schritt S7 wird eine Mediumgröße des zu bedruckenden Mediums durch einen Nutzer in den Client 4 eingegeben. Falls die maximale Mediumgröße in S6 empfangen wurde, kann die einzugebende Mediumgröße auf die maximale Mediumgröße begrenzt sein. Folglich wird sichergestellt, dass das Medium durch den Nutzer des Clients 4 nicht zu groß gestaltet wird, so dass eine hohe Druckqualität des Mediums und eine Verwendung des vorgegeben Druckers 6 sichergestellt werden.

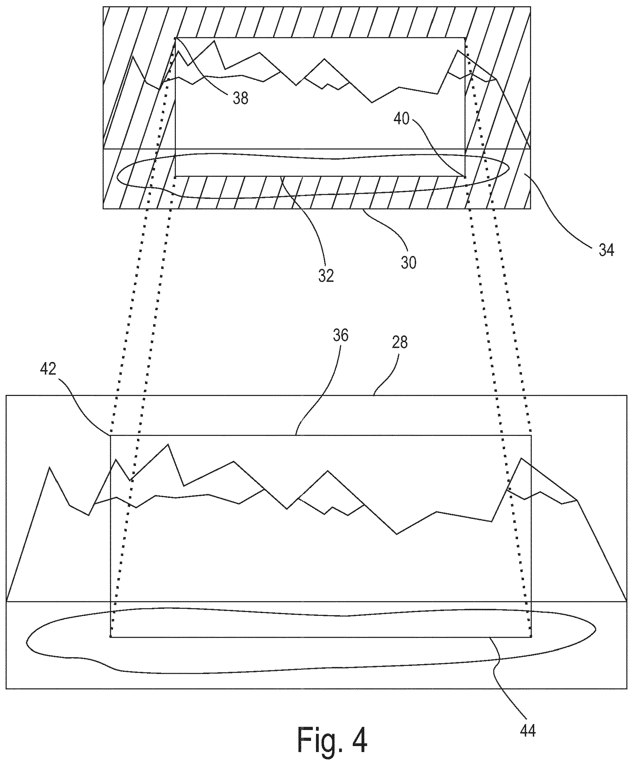

In Schritt S8 wird ein Vorschaubildbereich 32 in dem Vorschaubild 30 festgelegt. Der Vorschaubildbereich 32 entspricht dabei der Mediumgröße, also auch einem Format des Mediums, und einem gewünschten Inhalt des zu bedruckenden Mediums in dem Vorschaubild 30. Das Festlegen des Vorschaubildbereichs 32 in dem Vorschaubild 30 ist in Fig. 4 dargestellt. Der Vorschaubildbereich 32 wird auf dem Client 4 insbesondere mittels einer grafischen Nutzeroberfläche, die eine Echtbilddarstellung (auch als WYSIWYG ("What you see is what you get") bezeichnet) erlaubt, wie z.B. der Website oder der Anwendung auf dem Client 4, festgelegt. Dabei wird der Vorschaubildbereich 32 in das Vorschaubild 30 gezeichnet bzw. in dem Vorschaubild 30 überlagert angezeigt. Es ist zu erkennen, dass der Vorschaubildbereich 32 kleiner als das Vorschaubild 30 festgelegt ist. Ein Bereich 34 außerhalb des Vorschaubildbereichs 32 ist in Fig. 4 schraffiert angezeigt. Der Bereich 34 kann auf der grafischen Nutzeroberfläche mit einem geringeren Kontrast und/oder einer geringeren Helligkeit und/oder einer geringeren Sättigung angezeigt werden. Demzufolge kann ein Nutzer den Inhalt des Vorschaubildbereichs 32 zuverlässig identifizieren.

In der vorliegenden Ausführungsform umfasst das Festlegen des Vorschaubildbereichs 32 insbesondere ein Drehen des Vorschaubilds 30. Alternativ oder zusätzlich kann das Vorschaubild 30 gespiegelt werden. Falls zudem zuvor die maximale Mediumgröße übertragen wurde und die eingegebene Mediumgröße kleiner als die maximale Mediumgröße ist, kann das Feststellen alternativ oder zusätzlich das Vergrößern des Vorschaubilds 30 umfassen. Demzufolge kann der Nutzer des Clients 4 einen Inhalt des Vorschaubildbereichs 32 und folglich auch den Inhalt des zu bedruckenden Mediums entsprechend seinen Wünschen anpassen. Es ist anzumerken, dass eine maximale Mediumgröße durch das Festlegen des Vorschaubildbereichs 32, insbesondere durch das Drehen des Vorschaubilds 28, reduziert sein kann.

Zurück zu Fig. 2A. In Schritt S9 werden die eingegebene Mediumgröße und die Merkmale des in Schritt S8 festgelegten Vorschaubildbereichs 32 von dem Client 4 an den Server 2 übertragen. Die Merkmale des Vorschaubildbereichs 32 umfassen eine Form und eine Größe des Vorschaubildbereichs 32. Dies kann z.B. durch die Angabe von Koordinaten von Eckpunkten erfolgen. Alternativ kann der Vorschaubildbereich 32 auch als eine Funktionsgleichung angegeben werden. In der vorliegenden Ausführungsform ist das Medium rechteckförmig und es reicht insbesondere aus, X- und Y- Koordinaten von mindestens zwei diagonal gegenüberliegenden Eckpunkten 38, 40 (siehe Fig. 4) des Vorschaubildbereichs 32 an den Server 2 zu übertragen. Alternativ kann auch nur ein Eckpunkt, z.B. die X- und Y-Koordinaten des Eckpunkts 38, zusammen mit einer Länge und einer Breite in den Merkmalen des Vorschaubildbereichs 32 vorhanden sein. Die Länge und die Breite des Vorschaubildbereichs 32 sind dabei entsprechend der Ausbreitungsrichtung von dem Eckpunkt 38 als positive oder negative Werte vorhanden. Demzufolge kann der zweite Eckpunkt 40 durch den Server 2 berechnet werden. Als Koordinatenursprung kann insbesondere eine linke obere Ecke des Vorschaubilds 30 verwendet werden. Alternativ oder zusätzlich kann eine Größe des Vorschaubilds 30 übertragen werden. Falls das Vorschaubild 30 beim Festlegen des Vorschaubildbereichs 32 gedreht und/oder gespiegelt und/oder vergrößert wurde, können zusätzlich ein Drehwinkel des Vorschaubilds 30 und/oder eine Spiegelung des Vorschaubilds 30 und/oder ein Vergrößerungsfaktor des Vorschaubilds 30 in den Merkmalen des Vorschaubildbereichs 32 vorhanden sein. Folglich kann eine Festlegung des Inhalts des zu bedruckenden Mediums durch den Vorschaubildbereich 32 zuverlässig und dateneffizient von dem Client 4 an den Server 2 übertragen werden.

In Schritt S10 (siehe Fig. 2B) werden die Mediumgröße des zu bedruckenden Mediums und die Merkmale des Vorschaubildbereichs 32 von dem Sever 2 empfangen. Wie oben beschrieben, entspricht der Vorschaubildbereich 32 der Mediumgröße und dem gewünschten Inhalt des zu bedruckenden Mediums in dem Vorschaubild 30.

In Schritt S11 wird der Vorschaubildbereich 32 auf das Originalbild 28 transformiert, um einen Originalbildbereich 36 zu erhalten, der flächenfüllend auf das Medium zu drucken ist. Ein Transformieren des Vorschaubildbereichs 32 auf das Originalbild 28 ist in Fig. 4 gezeigt. Es ist zu erkennen, dass der Inhalt des Vorschaubildbereichs 32 auch einem Inhalt des Originalbildbereichs 36 entspricht. Da das Originalbild 28 größer als das Vorschaubild 30 ist und/oder eine höhere Auflösung als dieses besitzt, wird beim Drucken eine höhere Druckqualität erreicht. Aufgrund der höheren Pixelanzahl im Originalbild 28 entspricht das Transformieren des Vorschaubildbereichs 32 auf das Originalbild 28 daher einer Koordinatentransformation. In der vorliegenden Ausführungsform werden dabei insbesondere der Eckpunkt 38 des Vorschaubildbereichs 32 in den Eckpunkt 42 des Originalbildbereichs 36 und der Eckpunkt 40 des Vorschaubildbereichs 32 in den Eckpunkt 44 des Originalbildbereichs 36 transformiert. Alternativ kann zum Beispiel auch nur der Eckpunkt 38 des Vorschaubildbereich 32 in den Eckpunkt 42 des Originalbildbereichs 36 transformiert werden und die Länge und die Breite des Vorschaubildbereichs 32, die in den Merkmalen des Vorschaubildbereichs 32 vorhanden sein können, können in eine Länge und eine Breite des Originalbildbereichs 36 transformiert werden, um den Eckpunkt 44 des Originalbildbereich 36 zu berechnen.

In Schritt S12 wird durch den Server 2 ein Druckbefehl zum flächenfüllenden Drucken des Originalbildbereichs 36 auf das Medium generiert und an den Drucker 6 ausgegeben. Der Druckbefehl kann insbesondere im pdf- oder eps-Format ausgegeben werden.

In Schritt S13 empfängt der Drucker 6 den Druckbefehl von dem Server 2 und druckt das Medium, das den Originalbildbereich 36 als Inhalt aufweist. Es ist anzumerken, dass das Medium initial auf ein größeres Mediummaterial gedruckt werden kann und das Drucken auch ein Zuschneiden des Mediummaterials auf die Mediumgröße umfassen kann.

In der vorliegenden Ausführungsform ist es folglich nicht erforderlich, das Originalbild 28 von dem Server 2 an den Client 4 zu übertragen. Außerdem ist es nicht erforderlich, ein durch den Client 4 bearbeitetes Bild von dem Client 4 an den Server 2 zu übertragen. Demzufolge wird eine zu übertragende Datenmenge reduziert und eine Bedienbarkeit auf dem Client 4 verbessert. Wenn zusätzlich die maximale Mediumgröße ermittelt und übertragen wird, kann eine hohe Druckqualität des Mediums sichergestellt werden.

### Bezugszeichenliste

- 1: Netzwerksystem
- 2: Server
- 4: Client
- 6: Drucker
- 8: Netzwerk
- 10: Speicher
- 12: Prozessor
- 14: Netzwerkschnittstelle
- 16: Speicher
- 18: Prozessor
- 20: Netzwerkschnittstelle
- 22: Speicher
- 24: Prozessor
- 26: Netzwerkschnittstelle
- 28: Originalbild
- 30: Vorschaubild
- 32: Vorschaubildbereich
- 34: Bereich außerhalb des Vorschaubildbereichs
- 36: Originalbildbereich
- 38: Eckpunkt des Vorschaubildbereichs
- 40: Eckpunkt des Vorschaubildbereichs
- 42: Eckpunkt des Originalbildbereichs
- 44: Eckpunkt des Originalbildbereichs

## Patentansprüche

1. Computer-implementiertes Verfahren mit den folgenden Schritten:
Laden eines Originalbilds (28) aus einem Speicher (10);
Verkleinern und/oder Komprimieren des Originalbilds (28) zu einem Vorschaubild (30);
Übertragen des Vorschaubilds (30) an einen Client (4);
Empfangen einer Mediumgröße eines zu bedruckenden Mediums und von Merkmalen eines Vorschaubildbereichs (32), der der Mediumgröße und einem gewünschten Inhalt des zu bedruckenden Mediums in dem Vorschaubild (30) entspricht, von dem Client (4), wobei der Vorschaubildbereich (32) kleiner als das Vorschaubild (30) festgelegt ist, wobei bei Anpassung des Vorschaubildbereichs (32) kein neues Vorschaubild (30) generiert und übertragen wird;
Transformieren des Vorschaubildbereichs (32) auf das Originalbild (28), um einen Originalbildbereich (36) zu erhalten, der flächenfüllend auf das Medium zu drucken ist; und
Ausgeben eines Druckbefehls zum flächenfüllenden Drucken des Originalbildbereichs (36) auf das Medium an einen Drucker (6).

2. Verfahren gemäß Anspruch 1, das folgenden Schritt aufweist:
vor dem Übertragen des Vorschaubilds (30) an den Client (4), Ermitteln einer maximalen Mediumgröße, insbesondere einer maximalen Mediumhöhe und einer maximalen Mediumbreite, anhand einer Größe und einer Auflösung des Originalbilds (28);
wobei das Übertragen des Vorschaubilds (30) Übertragen der maximalen Mediumgröße aufweist.

3. Verfahren gemäß einem der vorhergehenden Ansprüche, wobei
das Vorschaubild (30) durch Umwandeln in das jpg- oder WebP-Format komprimiert wird.

4. Verfahren gemäß einem der vorhergehenden Ansprüche, wobei
das Originalbild (28) eine minimale Größe von 2700 Pixel mal 2700 Pixel und eine minimale Auflösung von 70 dpi aufweist.

5. Computer-implementiertes Verfahren mit den folgenden Schritten:
Empfangen eines Vorschaubilds (30) von einem Server (2);
Eingeben einer Mediumgröße eines zu bedruckenden Mediums;
Festlegen eines Vorschaubildbereichs (32), der der Mediumgröße und einem gewünschten Inhalt des zu bedruckenden Mediums in dem Vorschaubild (30) entspricht, wobei der Vorschaubildbereich (32) kleiner als das Vorschaubild (30) festgelegt wird, wobei der Vorschaubildbereich (32) unter Verwendung einer grafischen Nutzeroberfläche, die eine Echtbildarstellung ermöglicht, angezeigt wird, wobei Bereiche des Vorschaubilds (30), die in dem Vorschaubildbereich (32) enthalten sind, hervorgehoben angezeigt werden, wobei bei Anpassung des Vorschaubildbereichs (32) kein neues Vorschaubild (30) empfangen wird; und
Übertragen der Mediumgröße und von Merkmalen des Vorschaubildbereichs (32) an den Server (2).

6. Verfahren gemäß Anspruch 5, wobei:
das Empfangen des Vorschaubilds (30) Empfangen einer maximalen Mediumgröße umfasst; und
die einzugebende Mediumgröße auf die maximale Mediumgröße begrenzt ist.

7. Verfahren gemäß Anspruch 5 oder 6, wobei
das Festlegen des Vorschaubildbereichs (32) Drehen des Vorschaubilds (30) und/oder Spiegeln des Vorschaubilds (30) und/oder, falls die die eingegebene Mediumgröße kleiner als die maximale Mediumgröße ist, Vergrößern des Vorschaubilds (30) umfasst.

8. Verfahren gemäß einem der Ansprüche 5 bis 7, wobei
die Merkmale des Vorschaubildbereichs (30) eine Form und eine Größe des Vorschaubildbereichs (32), insbesondere X- und Y- Koordinaten von mindestens zwei diagonal gegenüberliegenden Eckpunkten (38, 40) des Vorschaubildbereichs (32) oder insbesondere X- und Y-Koordinaten eines Eckpunkts (38) des Vorschaubildbereichs (32) zusammen mit einer Länge und einer Breite des Vorschaubildbereichs (32), und/oder eine Größe des Vorschaubilds (30) und/oder einen Drehwinkel des Vorschaubilds (30) und/oder eine Spiegelung des Vorschaubilds (30) und/oder einen Vergrößerungsfaktor des Vorschaubilds (30) umfassen.

9. Verfahren gemäß einem der vorhergehenden Ansprüche, wobei
eine Länge einer längeren Seite des Vorschaubilds (30) 1920 Pixel und noch bevorzugter 1000 Pixel ist.

10. Verfahren gemäß einem der vorhergehenden Ansprüche, wobei
das Medium eine minimale Mediumgröße von 1 m mal 1 m aufweist.

11. Server (2) mit einem Speicher (10), in dem ein Originalbild (28) gespeichert ist, einer Netzwerkschnittstelle (14) und einem Prozessor (12),
wobei der Prozessor (12) programmiert ist, um die folgenden Schritte auszuführen:
Laden eines Originalbilds (28) aus dem Speicher (10);
Verkleinern und/oder Komprimieren des Originalbilds (28) zu einem Vorschaubild (30);
Übertragen des Vorschaubilds (30) an einen Client (4) über die Netzwerkschnittstelle (14);
Empfangen einer Mediumgröße eines zu bedruckenden Mediums und von Merkmalen eines Vorschaubildbereichs (32), der der Mediumgröße und einem gewünschten Inhalt des zu bedruckenden Mediums in dem Vorschaubild (30) entspricht, von dem Client (4) über die Netzwerkschnittstelle (14), wobei der Vorschaubildbereich (32) kleiner als das Vorschaubild (30) festgelegt ist, wobei bei Anpassung des Vorschaubildbereichs (32) kein neues Vorschaubild (30) generiert und übertragen wird;
Transformieren des Vorschaubildbereichs (32) auf das Originalbild (28), um einen Originalbildbereich (36) zu erhalten, der flächenfüllend auf das Medium zu drucken ist, und
Ausgeben eines Druckbefehls zum flächenfüllenden Drucken des Originalbildbereichs (36) auf das Medium an einen Drucker (6).

12. Client (4) mit einem Speicher (16), einer Netzwerkschnittstelle (20) und einem Prozessor (18),
wobei der Prozessor (18) programmiert ist, um die folgenden Schritte auszuführen:
Empfangen eines Vorschaubilds (30) von einem Server (2) über die Netzwerkschnittstelle (20) und Speichern des Vorschaubilds im Speicher (16);
Eingeben einer Mediumgröße eines zu bedruckenden Mediums;
Festlegen eines Vorschaubildbereichs (32), der der Mediumgröße und einem gewünschten Inhalt des zu bedruckenden Mediums in dem Vorschaubild (30) entspricht, wobei der Vorschaubildbereich (32) kleiner als das Vorschaubild (30) festgelegt wird, wobei der Vorschaubildbereich (32) unter Verwendung einer grafischen Nutzeroberfläche, die eine Echtbildartstellung ermöglicht, angezeigt wird, wobei Bereiche des Vorschaubilds (30), die in dem Vorschaubildbereich (32) enthalten sind, hervorgehoben angezeigt werden, wobei bei Anpassung des Vorschaubildbereichs (32) kein neues Vorschaubild (30) empfangen wird; und
Übertragen der Mediumgröße und von Merkmalen des Vorschaubildbereichs (32) an den Server (2) über die Netzwerkschnittstelle (20).

13. Netzwerksystem (1) mit:
einem Server (2) gemäß Anspruch 11;
einem Client (4) gemäß Anspruch 12; und
einem Drucker (6), der ausgebildet ist, um den Druckbefehl von dem Server (2) zu empfangen und das Medium zu drucken.

14. Computerlesbares Speichermedium (10), umfassend Befehle, die bei Ausführung durch einen Computer diesen veranlassen, das Verfahren gemäß Anspruch 1 auszuführen.

15. Computerlesbares Speichermedium (16), umfassend Befehle, die bei Ausführung durch einen Computer diesen veranlassen, das Verfahren gemäß Anspruch 5 auszuführen.

## Claims

1. A computer-implemented method with the following steps:
loading an original image (28) from a storage (10);
downscaling and/or compressing the original image (28) to a thumbnail image (30);
transmitting the thumbnail image (30) to a client (4);
receiving a medium size of a medium to be printed on and features of a thumbnail image region (32) corresponding to the medium size and a desired content of the medium to be printed on in the thumbnail image (30) from the client (4), wherein the thumbnail image region (32) is set to be smaller than the thumbnail image (30), wherein, when the thumbnail image region (32) is adjusted, no new thumbnail image (30) is generated and transmitted;
transforming the thumbnail image region (32) to the original image (28) to obtain an original image region (36) to be printed on the medium in a surface-filling manner; and
issuing a printing command to a printer (6) for printing the original image region (36) on the medium in a surface-filling manner.

2. The method according to claim 1, comprising the following step:
before transmitting the thumbnail image (30) to the client (4), determining a maximum medium size, in particular a maximum medium height and a maximum medium width, based on a size and a resolution of the original image (28);
wherein the transmitting of the thumbnail image (30) comprises transmitting of the maximum medium size.

3. The method according to of the preceding claims, wherein
the thumbnail image (30) is compressed by converting it to jpg or WebP format.

4. The method according to one of the preceding claims, wherein
the original image (28) has a minimum size of 2700 pixels by 2700 pixels and a minimum resolution of 70 dpi.

5. A computer-implemented method with the following steps:
receiving a thumbnail image (30) from a server (2);
inputting a medium size of a medium to be printed on;
setting a thumbnail image region (32) corresponding to the medium size and a desired content of the medium to be printed on in the thumbnail image (30), wherein the thumbnail image region (32) is set to be smaller than the thumbnail image (30), wherein the thumbnail image region (32) is displayed using a graphical user interface that enables real image display, wherein regions of the thumbnail image (30) that are included in the thumbnail image region (32) are displayed in a highlighted manner, wherein, when the thumbnail image region (32) is adjusted, no new thumbnail image (30) is received; and
transmitting the medium size and features of the thumbnail image region (32) to the server (2).

6. The method according to claim 5, wherein:
receiving the thumbnail image (30) comprises receiving a maximum medium size; and
the medium size to be input is limited to the maximum medium size.

7. The method according to claim 5 or 6, wherein
the setting of the thumbnail image region (32) comprises rotating the thumbnail image (30) and/or mirroring the thumbnail image (30) and/or, if the input medium size is smaller than the maximum medium size, enlarging the thumbnail image (30).

8. The method according to one of claims 5 to 7, wherein
the features of the thumbnail image region (30) include a shape and a size of the thumbnail image region (32), in particular X and Y coordinates of at least two diagonally opposite corner marks (38, 40) of the thumbnail image region (32) or in particular X and Y coordinates of a corner mark (38) of the thumbnail image region (32) together with a length and a width of the thumbnail image region (32), and/or a size of the thumbnail image (30) and/or a rotation angle of the thumbnail image (30) and/or mirroring of the thumbnail image (30) and/or a magnification factor of the thumbnail image (30).

9. The method according to one of the preceding claims, wherein
a length of a longer side of the thumbnail image (30) is 1920 pixels and even more preferably 1000 pixels.

10. The method according to one of the preceding claims, wherein
the medium has a minimum medium size of 1 m by 1 m.

11. A server (2) with a storage (10) in which an original image (28) is stored, a network interface (14) and a processor (12),
wherein the processor (12) is programmed to perform the following steps:
loading an original image (28) from the storage (10);
downscaling and/or compressing the original image (28) to a thumbnail image (30);
transmitting the thumbnail image (30) to a client (4) via the network interface (14);
receiving a medium size of a medium to be printed on and features of a thumbnail image region (32) corresponding to the medium size and a desired content of the medium to be printed on in the thumbnail image (30) from the client (4) via the network interface (14), wherein the thumbnail image region (32) is set to be smaller than the thumbnail image (30), wherein, when the thumbnail image region (32) is adjusted, no new thumbnail image (30) is generated and transmitted;
transforming the thumbnail image region (32) onto the original image (28) to obtain an original image region (36) to be printed on the medium as to fill the surface thereof, and
issuing a printing command to a printer (6) for printing the original image region (36) on the medium in a surface-filling manner.

12. A client (4) with a storage (16), a network interface (20) and a processor (18),
wherein the processor (18) is programmed to perform the following steps:
receiving a thumbnail image (30) from a server (2) via the network interface (20) and storing the thumbnail image in the storage (16);
inputting a medium size of a medium to be printed on;
setting a thumbnail image region (32) corresponding to the medium size and a desired content of the medium to be printed on in the thumbnail image (30), wherein the thumbnail image region (32) is set to be smaller than the thumbnail image (30), wherein the thumbnail image region (32) is displayed using a graphical user interface that enables real image display, wherein regions of the thumbnail image (30) that are included in the thumbnail image region (32) are displayed in a highlighted manner, wherein, when the thumbnail image region (32) is adjusted, no new thumbnail image (30) is received; and
transmitting the medium size and features of the thumbnail image region (32) to the server (2) via the network interface (20).

13. A network system (1) with:
a server (2) according to claim 11;
a client (4) according to claim 12; and
a printer (6) configured to receive the printing command from the server (2) and to print the medium.

14. A computer-readable storage medium (10) comprising commands which, when executed by a computer, cause the computer to execute the method according to claim 1.

15. A computer-readable storage medium (16) comprising commands which, when executed by a computer, cause the computer to execute the method according to claim 5.

## Revendications

1. Procédé mis en œuvre par ordinateur avec les étapes suivantes :
le chargement d'une imagine originale (28) depuis une mémoire (10) ;
la réduction et/ou la compression de l'image originale (28) en une image miniature (30) ;
la transmission de l'image miniature (30) à un client (4) ;
la réception par le client d'une taille de support d'un support à imprimer et de caractéristiques d'une zone d'image miniature (32) qui correspond à la taille de support et à un contenu souhaité du support à imprimer dans l'image miniature (30), dans lequel la zone d'image miniature (32) est définie comme étant plus petite que l'image miniature (30), dans lequel lors de l'adaptation de la zone d'image miniature (32), aucune nouvelle image miniature (30) n'est générée ou transmise ;
la transformation de la zone d'image miniature (32) sur l'image originale afin d'obtenir une zone d'image originale (36) qui est à imprimer de façon à remplir la surface sur le support ; et
la délivrance à une imprimante (6) d'un ordre d'impression pour l'impression de façon à remplir la surface de la zone d'image originale (36) sur le support.

2. Procédé selon la revendication 1 qui présente l'étape suivante :
avant la transmission de l'image miniature (30) au client (4), la détermination d'une taille de support maximale, en particulier d'une hauteur de support maximale et d'une largeur de support maximale, à l'aide d'une taille et d'une résolution de l'image originale (28) ;
dans lequel la transmission de l'image miniature (30) présente la transmission de la taille de support maximale.

3. Procédé selon l'une quelconque des revendications précédentes, dans lequel
l'image miniature (30) est comprimée par conversion au format jpg ou WebP.

4. Procédé selon l'une quelconque des revendications précédentes, dans lequel
l'image originale (28) présente une taille minimale de 2700 pixels x 2700 pixels et une résolution minimale de 70 dpi.

5. Procédé mis en œuvre par ordinateur avec les étapes suivantes :
la réception d'une image miniature (30) par un serveur (2) ;
l'entrée d'une taille de support d'un support à imprimer ;
la détermination d'une zone d'image miniature (32) qui correspond à la taille de support et à un contenu souhaité du support à imprimer dans l'image miniature (30), dans lequel la zone d'image miniature (32) est définie plus petite que l'image miniature (30), dans lequel la zone d'image miniature (32) est affichée en utilisant une interface utilisateur graphique qui permet une représentation d'image réelle, dans lequel des zones de l'image miniature (30) qui sont contenues dans la zone d'image miniature (32), sont affichées en étant mises en évidence, dans lequel lors de l'adaptation de la zone d'image miniature (32), aucune nouvelle image miniature (30) n'est reçue ; et
la transmission au serveur (2) de la taille de support et de caractéristiques de la zone d'image miniature (32).

6. Procédé selon la revendication 5, dans lequel :
la réception de l'image miniature (30) comprend la réception d'une taille de support maximale ; et
la taille de support à entrer est limitée à la taille de support maximale.

7. Procédé selon la revendication 5 ou 6, dans lequel
la détermination de la zone d'image miniature (32) comprend la rotation de l'image miniature (30) et/ou la mise en miroir de l'image miniature (30) et/ou si la taille de support entrée est inférieure à la taille de support maximale, comprend l'agrandissement de l'image miniature (30).

8. Procédé selon l'une quelconque des revendications 5 à 7, dans lequel
les caractéristiques de la zone d'image miniature (30) comprennent une forme et une taille de la zone d'image miniature (32), en particulier de coordonnées X et Y d'au moins deux sommets (38, 40) opposés en diagonale de la zone d'image miniature (32) ou en particulier de coordonnées X et Y d'un sommet (38) de la zone d'image miniature (32) conjointement avec une longueur et une largeur de la zone d'image miniature (32), et/ou une grandeur de l'image miniature (30) et/ou un angle de rotation de l'image miniature (30) et/ou un angle de rotation de l'image miniature (30) et/ou une mise en miroir de l'image miniature (30) et/ou un facteur d'agrandissement de l'image miniature (30).

9. Procédé selon l'une quelconque des revendications précédentes, dans lequel
une longueur d'un plus grand côté de l'image miniature (30) s'élève à 1920 pixels et encore plus préférentiellement à 1000 pixels.

10. Procédé selon l'une quelconque des revendications précédentes, dans lequel
le support présente une taille de support minimale de 1 m x 1 m.

11. Serveur (2) avec une mémoire (10) dans laquelle une image originale (28) est enregistrée, une interface réseau (14) et un processeur (12),
dans lequel le processeur (12) est programmé afin d'exécuter les étapes suivantes :
le chargement d'une imagine originale (28) depuis la mémoire (10) ;
la réduction et/ou la compression de l'image originale (28) en une image miniature (30) ;
la transmission de l'image miniature (30) à un client (4) par le biais de l'interface réseau (14) ;
la réception par le client par le biais de l'interface réseau (14) d'une taille de support d'un support à imprimer et de caractéristiques d'une zone d'image miniature (32) qui correspond à la taille de support et à un contenu souhaité du support à imprimer dans l'image miniature (30), dans lequel la zone d'image miniature (32) est définie comme étant plus petite que l'image miniature (30), dans lequel lors de l'adaptation de la zone d'image miniature (32), aucune nouvelle image miniature (30) n'est générée ou transmise ;
la transformation de la zone d'image miniature (32) sur l'image originale afin d'obtenir une zone d'image originale (36) qui est à imprimer de façon à remplir la surface sur le support, et
la délivrance à une imprimante (6) d'un ordre d'impression pour l'impression de façon à remplir la surface de la zone d'image originale (36) sur le support.

12. Client (4) avec une mémoire (16), une interface réseau (20) et un processeur (18),
dans lequel le processeur (18) est programmé afin d'exécuter les étapes suivantes :
la réception d'une image miniature (30) par un serveur (2) par le biais d'une interface réseau (20) et le stockage de l'image miniature dans la mémoire (16) ;
l'entrée d'une taille de support d'un support à imprimer ;
la détermination d'une zone d'image miniature (32) qui correspond à la taille de support et à un contenu souhaité du support à imprimer dans l'image miniature (30), dans lequel la zone d'image miniature (32) est définie plus petite que l'image miniature (30), dans lequel la zone d'image miniature (32) est affichée en utilisant une interface utilisateur graphique qui permet une représentation d'image réelle, dans lequel des zones de l'image miniature (30) qui sont contenues dans la zone d'image miniature (32), sont affichées en étant mises en évidence, dans lequel lors de l'adaptation de la zone d'image miniature (32), aucune nouvelle image miniature (30) n'est reçue ; et
la transmission au serveur (2) de la taille de support et de caractéristiques de la zone d'image miniature (32) par le biais de l'interface réseau (20).

13. Système de réseau (1) avec :
un serveur (2) selon la revendication 11 ;
un client (4) selon la revendication 12 ; et
une imprimante (6) qui est configurée afin de recevoir l'ordre d'impression du serveur (2) et d'imprimer le support.

14. Support de stockage lisible par ordinateur (10), comprenant des ordres qui, lorsqu'ils sont exécutés par un ordinateur, amènent celui-ci à exécuter le procédé selon la revendication 1.

15. Support de stockage lisible par ordinateur (16), comprenant des ordres qui, lorsqu'ils sont exécutés par un ordinateur, amènent celui-ci à exécuter le procédé selon la revendication 5.
